Europäisches Patentamt

European Patent Office

Office européen des brevets

(11) Veröffentlichungsnummer: **0 292 953 B1**

## EUROPÄISCHE PATENTSCHRIFT

(45) Veröffentlichungstag der Patentschrift: **08.07.92**

(21) Anmeldenummer: **88108372.9**

(22) Anmeldetag: **26.05.88**

(51) Int. Cl.⁵: **F27D 3/02**, F27B 9/24, C03B 15/18

(54) **Rolle für Fördergut.**

(30) Priorität: **30.05.87 DE 3718286**

(43) Veröffentlichungstag der Anmeldung:
**30.11.88 Patentblatt 88/48**

(45) Bekanntmachung des Hinweises auf die Patenterteilung:
**08.07.92 Patentblatt 92/28**

(84) Benannte Vertragsstaaten:
**AT BE CH DE ES FR GB GR IT LI LU NL SE**

(56) Entgegenhaltungen:
**BE-A- 665 114         DE-B- 1 282 859**
**DE-B- 3 001 371      DE-C- 966 177**
**GB-A- 1 042 987      US-A- 2 788 957**

(73) Patentinhaber: **LWK-Plasmakeramik GmbH**
**Dipl.-Ing. Knut W. Weber**
**Am Verkehrskreuz 6**
**W-5276 Wiehl(DE)**

(72) Erfinder: **Weber, Knut Willi, Dipl.-Ing.**
**An der Kirchhardt 12**
**W-5276 Wiehl(DE)**

(74) Vertreter: **Sturies, Herbert et al**
**Patentanwälte Dr. Ing. Dipl. Phys. Herbert Sturies Dipl. Ing. Peter Eichler Brahmsstrasse 29, Postfach 20 12 42**
**W-5600 Wuppertal 2(DE)**

EP 0 292 953 B1

## Beschreibung

Die Erfindung bezieht sich auf eine Rolle für Fördergut von Durchlaufofen- und Heißbeschichtungsanlagen, mit einem aus hitze- und/oder korrosionbeständigem keramischem Werkstoff bestehenden hohlen Rollenkörper, dessen Hohlraum zumindest im Bereich innerhalb seiner Förderfläche mit einem wärmebeständigen Füllmittel gefüllt ist, das mindestens einen Formkörper bildet und einen dem Werkstoff des Rollenkörpers etwa entsprechenden Ausdehnungskoeffizienten aufweist, und mit einer außerhalb des Durchlaufbereichs der Anlage angeordneten Rotationslagerfläche.

Rollen mit keramischem Rollenkörper werden im Hochtemperaturbereich von z.B. 200°C bis 2500°C eingesetzt. Hitze- und/ oder korrosionsbeständige keramische Werkstoffe im vorgenannten Sinne sind beispielsweise Metalloxide, -karbide oder -silikate. Sie dienen beispielsweise der Förderung von bandförmigem Gut in Durchlauföfen, beispielsweise in Durchlauföfen von Verzinkungsanlagen, sowie in Nichteisenmetall-Schmelzebädern, beispielsweise in Verzinkungsbädern. Derartige Rollen sind jedoch nicht nur thermischen Beanspruchungen ausgesetzt, sondern auch mechanischen Beanspruchungen. Die Rollenkörper sind hohl und ihr keramischer Werkstoff hält nur begrenzten mechanischen Belastungen stand.

Aus der GB-A-1 042 987 ist eine Rolle zum Gebrauch bei hohen Temperaturen bekannt, mit der Glasscheiben in der Durchlaufanlage gefördert werden. Die Rolle besteht aus einem Silika-Kernmaterial, das von einer glatten Umhüllung aus hitzebeständigem Werkstoff umgeben ist. Letzterem kann eine Oberfläche gegeben werden, die eine für die zu fördernden Glasscheiben nicht adhäsive Außenfläche hat. Eine derartige Rolle ist ebenfalls nur begrenzt belastbar, da ihr hitzebeständiger Überzug die Tragfähigkeit nicht wesentlich verbessern kann und ihr Silika-Körper bezüglich der Tragfähigkeit mit derjenigen keramischer Rollenkörper vergleichbar ist.

Aus der DE-C-966 177 ist eine Rolle mit den eingangs genannten Merkmalen bekannt. Der Rollenkörper besteht aus Siliziumcarbid. Das wärmebeständige Füllmittel ist eine Masse aus schwer schmelzbarem wärmeisolierendem Zement und die Rotationslagerfläche der Rolle befindet sich an einer Welle, die gleichachsig von dem Füllmittel und von dem Rollenkörper umgeben ist. Die Welle ragt mit ihren Enden aus dem Durchlaufbereich der Anlage durch die Ofenwände hinaus und ist dort in Rotationslagern abgestützt. Im Bereich zwischen den Enden des bekannten Rollenkörpers und der Ofenwand ist die Welle jedoch der Temperatur des Durchlauf- bzw. Hochtemperaturbereichs ungeschützt ausgesetzt. Daher ist die aus Stahl bestehende bekannte Welle hohl und muß gekühlt werden. Trotzdem ist die bekannte Rolle nur für einen begrenzten Hochtemperaturbereich einsetzbar, bedingt durch die Schmelztemperatur der Stahlwelle und der Aufwand für die Kühlung ist insbesondere bei der Vielzahl von Rollen für Durchlauföfen beträchtlich.

Der Erfindung liegt daher die Aufgabe zugrunde, eine Rolle mit den eingangs genannten Merkmalen so zu verbessern, daß sie eine ausreichend hohe Festigkeit besitzt, insbesondere bei Zugbeanspruchungen, wobei die thermische Stabilität der gesamten Rolle auch für besonders hohe Temperaturen gewährleistet sein soll.

Diese Aufgabe wird dadurch gelöst, daß der Rollenkörper aus einem thermisch gespritzten keramischen Werkstoff besteht, daß das Füllmittel Grafit, Kohlenstoff, Metalloxid oder Siliziumkarbid ist, und daß Füllmittel im Bereich der Rotationslagerfläche vorhanden ist.

Für die Erfindung ist von Bedeutung, daß der Hohlraum des Rollenkörpers durch das Füllmittel vollständig ausgefüllt sein kann. Infolgedessen stützt sich der Rollenkörper bei Belastungen seiner Förderfläche auf dem Füllmittel ab, so daß seine Beanspruchung reduziert wird. Insbesondere werden lokale Belastungen des Rollenkörpers durch Auflage des Förderguts auf flächenmäßig begrenzten Stellen des Rollenkörpers verringert. Dabei wirkt sich vergleichmäßigend aus, daß der keramische Werkstoff des Rollenkörpers und das wärmebeständige Füllmittel gleiche Ausdehnungskoeffizienten aufweisen, so daß bei der festigkeitsmäßigen Auslegung der Rolle für unterschiedlich hohe Temperaturen stets davon ausgegangen werden kann, daß der hohle Rollenkörper dieselben Abstützverhältnisse auf dem Füllmittel hat, so daß die mechanische Festigkeit einer bestimmten Rolle praktisch unabhängig von dem Temperatureinsatzbereich dieser Rolle ist. Die erfindungsgemäße Rolle ist insbesondere im Hochtemperaturbereich im Vergleich zu Stahlrollen von Vorteil, weil Stahl im Hochtemperaturbereich an Belastbarkeit grundsätzlich erheblich verliert, was bei plasmakeramischen Teilen in Verbindung mit Füllmitteln nicht der Fall ist. Da der keramische Rollenkörper und das wärmebeständige Füllmittel etwa entsprechende Ausdehnungskoeffizienten haben, besteht die grundsätzliche Möglichkeit, beide fest miteinander zu verbinden, beispielsweise durch Sinterung. Hierdurch wird die mechanische Festigkeit der Rollen ebenfalls gesteigert. Das wärmebeständige Füllmittel braucht nicht die chemische Resistenz aufzuweisen, die der Rollenkörper infolge seines keramischen Werkstoffs hat. Der Rollenkörper schützt also gegen chemische Beeinträchtigung des Füllmittels. Dieses wird durch die Einkapselung mittels des Rollenkörpers auch thermisch abgekapselt, so daß die Rolle auch bei thermischen Bedingungen und unter oxidierenden Einflüssen eingesetzt werden kann, die das Füllmittel an sich nicht verträgt. Der Rollenkörper schützt seine korodierbaren Einbauten auch gegen Korrosion, beispielsweise eine tragende Stahlwelle.

Das Füllmittel weist Grafit, Kohlenstoff, Metalloxid oder Siliziumkarbid auf oder besteht daraus. Es versteht sich, daß diese oder ähnliche Stoffe nicht unbedingt in ihrer Reinform zur Anwendung kommen können, sondern auch gebunden, imprägniert oder dergleichen oder miteinander gemischt. Bei der Auswahl des Füllmittels kommt es auf die jeweilige Rollenkonstruktion an, also auf den Aufbau der Rolle und insbesondere auf den Aufbau des Rollenkörpers, sowie auf die thermischen Beanspruchungen der Rolle und deren chemische Belastung im Einsatzbereich.

Eine weitere grundlegende Rollenkonstruktion ist dadurch gekennzeichnet, daß der Rollenkörper und/oder eine Zugbewehrungseinlage zumindest an einem Ende eine Rotationslagerfläche für ein Rotationslager hat und das Füllmittel auch das Lagerende des Rollenkörpers vollständig ausfüllt und/oder daß der Rollenkörper und/oder eine Zugbewehrungseinlage zumindest an einem Ende eine Rotationslagerfläche für Rotationslager hat und das Füllmittel auch das Lagerende des Rollenkörpers vollständig ausfüllt und/oder daß der Rollenkörper im Bereich der Rotationslagerfläche durchmesserverringert ist. Eine derartige Rolle weist im Hochtemperaturbereich keinerlei metallischen Bestandteile auf, welche thermischen und chemischen Grenzen unterworfen sind. Diese Rolle bildet also eine grundlegende Konstruktion für höchste thermische und chemische Beanspruchungen. Ein bevorzugter Einsatzbereich ist beispielsweise der 1100°C übersteigende Temperaturbereich.

Bei einem Rollenaufbau mit einem innerhalb des Rollenkörpers mit Abstand zu diesem angeordneten Koaxialzylinder ist es insbesondere von Vorteil, daß der zwischen dem Rollenkörper und dem Koaxialzylinder bzw. der Lagerwelle befindliche Hohlraum zumindest teilweise mit Füllmittel ausgefüllt ist, und daß an den Enden des Koaxialzylinders bzw. der Lagerwelle je eine Rotationslagerfläche vorhanden ist. Eine solche Rolle kann im Bereich ihrer Förderfläche einen vergleichsweise großen Außendurchmesser haben, was beispielsweise erforderlich ist, wenn das zu fördernde Gut umgelenkt werden soll, aber kleine Umlenkradien nicht verträgt. Diese Rolle ermöglicht die Beibehaltung der Rotationslagerflächen an den Enden der tragenden Wellen, so daß für unterschiedlich aufgebaute Rollen stets dieselbe Lagerung zu verwenden ist, auch unabhängig von dem Rollenaußendurchmesser. Des weiteren ermöglicht dieser radial gesehen mehrschichtige Aufbau der Rolle die Verwendung von Füllmitteln unterschiedlicher Eigenschaften, beispielsweise größerer Wärmebeständigkeit und Resistenz gegen chemische Belastungen im Ringraum des Koaxialzylinders und größerer mechanischer Belastbarkeit für die Lagerwelle und im Hohlraum des Koaxialzylinders. Infolgedessen ist es mögich, die mechanische Belastbarkeit der Rolle zu optimieren, beispielsweise im Sinne kleinster Wandstärken des keramischen Werkstoffs. Das Ausfüllen der Räume der Rolle mit Füllstoff erfolgt dann nur teilweise, wenn flutbare Hohlräume im Rolleninneren erwünscht sind, beispielsweise um den Rollenauftrieb beim Einsatz in Schmelzebädern zu verringern.

Als Hohlrolle, wenn also der Innenraum des Koaxialzylinders nicht mit einem Füllmittel ausgefüllt ist, kann sie besonders günstig als Heizrolle eingesetzt werden, indem also die elektrische Leitfähigkeit des Füllmittels zu Beheizungszwecken ausgenutzt wird, weil die Wärmeabgabe sowohl über den Koaxialzylinder als auch über den Rollenkörper an das umgebende Medium erfolgt. Das ringförmig angeordnete Füllmittel kann in diesem Falle auch als Schnur, spiralförmig dicht oder mit Abstand, gewickelt werden.

Das den Formkörper bildende Füllmittel ist in dem Hohlraum des Koaxialzylinders und/oder des Rollenkörpers ein- oder mehrstückig angeordnet und mit dem Rollenkörper und/oder mit dem Koaxialzylinder versintert, durch Verdichtung verbunden, verklebt formschlüssig drehfest verbunden oder davon lose. Es ist also möglich, das Füllmittel in Abstimmung auf den Rollenkörper und/oder den Koaxialzylinder in der jeweils gewünschten Ausbildung zu verwenden. Ein einstückiger Formkörper ist beispielsweise ein Stab, der den Hohlraum des Rollenkörpers vollständig ausfüllt. Der Ringraum des Koaxialzylinders wird durch einen entsprechend bemessenen Zylinder mit kreisringförmigem Querschnitt ausgefüllt. Statt einstückiger Formkörper können auch solche gleichen Querschnitts, aber kürzerer Länge zusammengesetzt eingebaut werden. Eine Verbindung des Füllmittels mit dem Rollenkörper bzw. mit dem Koaxialzylinder erfolgt beispielsweise durch Versinterung, durch mit feuerfestem Kit erfolgendes Verkleben oder durch formschlüssig drehfeste Verbindung, um Drehantriebskräfte von den Rollenenden her auf den Rollenkörper und ggfs. den Koaxialzylinder übertragen zu können, bzw. um das Fördergut anzutreiben, oder die Rolle von dem Fördergut in geeigneter Weise antreiben lassen zu können. Unter Sinterung wird dabei durchweg ein Brennvorgang verstanden, bei dem die Brenntemperatur auf das Füllmittel abgestimmt ist.

Auf der Rotationslagerfläche ist eine keramische oder aus korrosionsbeständigem Werkstoff bestehende Verschleißhülse angeordnet, um die Verwendungsdauer der Rolle zu vergrößern, beispielsweise durch Austausch der verbrauchten Hülse gegen eine neue.

An mindestens einem Ende des Rollenkörpers und/oder des Koaxialkörpers ist eine das Füllmittel abschirmende Abschlußscheibe angeordnet, die nicht nur die Widerstandsfähigkeit der Rolle bzw. des Füllmittels der Rolle gegen chemische und thermische Beanspruchung steigert, sondern auch die mechanische Festigkeit der Rolle verbessern kann. Die Abschlußscheibe kann auch als bekannte Wellen-Spreizkupplung ausgebildet sein, die zum Antrieb der Rolle herangezogen wird. Die Abschlußscheibe kann mit einem Absatz in das Innere des Rollenkörpers und/oder des Koaxialkörpers und/oder einer Zugbewehrungseinlage eingesetzt und damit und/oder mit dem Füllmittel axial fest und/ oder verdrehfest verbunden sein, oder die Abschlußscheibe umgreift den Rollenkörper und/oder den Axialkörper außen und sitzt daran fest, und/oder die Abschlußscheibe weist einen Achslagerzapfen für das Rotationslager auf. Diese Maßnahmen verbessern die vorerwähnte mechanische, thermische und chemische Belastbarkeit der Rolle in den jeweils genannten Konstruktionsfällen und mit Achslagerzapfen versehene Abschlußscheiben ermöglichen den Einsatz der betreffenden Rollen auch in bereits bestehenden Anlagen. Umgekehrt kann auch z.B. ein Schmelzbad nicht durch Bestandteile aus einem Hohlraum der Rolle verunreinigt werden.

Im Hohlraum des Rollenkörpers und/oder des Koaxialkörpers können Zugbewehrungseinlagen in der Nähe der keramischen Bauteile vorhanden sein. Hierdurch kann die mechanische Belastbarkeit der Rolle ganz erheblich gesteigert werden. Die Zugbewehrungseinlage kann in erster Linie auf die Aufnahme hoher mechanischer Belastungen abgestimmt werden und ist durch den keramischen Werkstoff des Rollenkörpers bzw. des Koaxialkörpers und durch das Füllmittel gegen thermische und chemische Beanspruchungen gut geschützt. In diesem Sinne ist eine Zugbewehrungseinlage mit dem Füllmittel unlösbar verbunden und/oder ein eigensteifer und/oder vorgespannter, mit Füllmittel füllbarer Körper. Die unlösbare Verbindung der Zugbewehrungseinlage mit dem Füllmittel erfolgt beispielsweise bei der Herstellung eines in den Koaxialkörper oder in den Rollenkörper einzusetzenden Formkörpers, also z.B. bei einem Preß- bzw. Brennvorgang. Wird ein Füllmittel verwendet, welches der Zugbewehrungseinlage nicht die erforderliche Form erteilen kann, so ist sie vorteilhafterweise ein eigensteifer Körper, der mit Füllmittel füllbar ist, also beispielsweise mit einem Pulver, so daß aus beiden gemeinsam der in der Rolle verwendbare Formkörper hergestellt werden kann. Ein eigensteifer Körper ist auch dann erforderlich, wenn das Füllmittel in der Rolle in Pulverform verbleiben soll. Dann muß die Zugbewehrungseinlage so ausgebildet sein, daß sie Belastungen der Rolle aufzunehmen vermag. Die Zugbewehrungseinlage kann bedarfsweise als vorgespannter Körper ausgebildet sein, um dem Füllmittel einen spannbetonähnlichen Effekt zu erteilen, der die mechanische Belastbarkeit des Füllmittels bzw. des davon gebildeten Formkörpers steigert.

Eine vorteilhafte Ausbildung des eigensteifen Körpers liegt vor, wenn der im Inneren des Rollenkörpers und/oder des Koaxialkörpers angeordnete eigensteife Körper zwei durch einen keramischen Stab auf Abstand gehaltene Formscheiben hat und von diese Bauteile zusammenhaltendem Faserwerkstoff umschlossen oder durchsetzt ist und/oder ein aus der Rolle herausgeführtes Zugende hat.

Die Rolle hat einen Gaseinleitungsanschluß für den Hohlraum des Rollenkörpers und/oder mindestens einen Anschluß für elektrische Energie. Mit dem Gaseinleitungsanschluß kann der Innenraum des Rollenkörpers mit einem Inertgas beschickt werden, welches sich dort bzw. in den vorhandenen oder sich im Laufe des Betriebs ergebenden Innenspalten verteilt und die Einbauten des Rollenkörpers gegen Oxydation oder Korrosion schützt. Mit dem Anschluß für elektrische Energie kann die Leitfähigkeit des Füllmittels, also beispielsweise des Grafits, zur Rollenbeheizung eingesetzt werden. Die effektive Energiezuleitung erfolgt beispielsweise über Bürstenkontakt oder drahtlos. Die Rollenbeheizung kann beispielsweise zur Ofen- und Schmelzbadbeheizung ausgenutzt werden. Die Rollenbeheizung vermeidet Erkaltungsprobleme an der Rolle und im Schmelzbad, z.B. auch beim Auswechseln der Rollen. Zugeführte elektrische Energie kann außer oder zusätzlich zur Beheizung auch anderen Vorgängen dienen, z.B. zum Aufbau elektromagnetischer Felder. Solche Felder können dem Erfassen und Messen von Fördervorgängen dienen. Die Rolle ist damit als Meßrolle einsetzbar, z.B. um unterschiedliche Fördergeschwindigkeiten zu messen.

Eine Weiterbildung der Erfindung betrifft eine Rolle mit einem Rotationslager und ist dadurch gekennzeichnet, daß das Rotationslager der Rolle mit mindestens einer Traglagerfläche eines Grafit, Kohlenstoff, Siliziumkarbid oder Metalloxid aufweisenden Lagerkörpers ausgerüstet ist. Eine derartige Rolle bzw. ein derartiges Rollenlager gewährleistet aufgrund seiner Traglagerfläche optimale Reibwerte und besitzt Trockenlaufeigenschaften auch im Hochtemperaturbereich. Es ist also ein besonders vorteilhaftes Lager für Lagerungen innerhalb von Öfen, so daß die Rollenenden der Förderrollen nicht in herkömmlicher Weise durch die Ofenwand hindurch nach außen geführt werden müssen, um dort kaltgelagert zu werden. Der Ofenbau vereinfacht sich dadurch ganz erheblich, insbesondere wegen der dann ersparten Abdichtungen in der Ofenwand. Eine derartige Rolle bzw. ein derartiges Lager ist aber auch grundsätzlich sehr gut zum Einsatz in einer Badschmelze geeignet, beispielsweise in einer Zinkschmelze einer Verzinkungsanlage.

Um besonders geringe Reibwerte zu erzielen, besteht der Lagerkörper aus zwei konzentrischen, in einer Lagerschale relativbeweglichen Lagerhülsen, zwischen denen eine keramische Lagerhülse relativbeweglich angeordnet ist. Die beidseitig der keramischen Lagerhülse angeordneten relativbeweglichen Lagerhülsen bewirken eine optimale Verteilung der mechanischen Zwänge bzw. Belastungen innerhalb des Lagers auf mehrere relativbewegliche Lagerhülsen mit entsprechend geringerem Verschleiß durch entsprechend verringerte spezifische Belastungen. Die drei Lagerhülsen können optimal auf die gewünschten Lagerzwecke abgestimmt werden, beispielsweise im Bereich der keramischen Lagerhülse, die besonders glatt und in besonderer Weise auf die Reibungskoeffizienten der sie umschließenden Lagerhülsen eingestellt werden kann.

In Ausgestaltung der Erfindung ist der Lagerkörper der Rolle mit Schmelzezutritt gestattendem Lagerspiel versehen und weist vertikale, eine Trennung des Abriebs des Lagerkörpers gestattene Abscheideausnehmungen und/oder Schmelzedehnungskammern auf. Ein solches Lager ist für Flüssigschmierung ausgelegt und mit den Abscheideausnehmungen bzw. mit den Schmelzedehnungskammern kann auf die besonderen Abriebverhältnisse und auf die Erstarrungsverhältnisse Rücksicht genommen werden, die beispielsweise dann auftreten, wenn der Abrieb des Lagerkörpers nicht in die Badschmelze gelangen soll bzw. das Lager beim Wechseln des Förderguts der Badschmelze entnommen werden muß.

Wenn das Lager zur Trockenlagerung ausgebildet sein soll, ist vorteilhafterweise der Lagerkörper der Rolle von einer Lagerschale umschlossen, die beidseitig des Lagerkörpers mit Dichtungselementen an der Rotationsfläche der Rolle abgedichtet ist. Auf diese Weise wird ein Zutritt von möglicherweise aggressiver Außenatmosphäre oder von thermisch und chemisch belastender Badschmelze in das Lagerinnere vermieden.

Das Dichtungselement ist zweckmäßigerweise ein Dichtungsring, eine in eine Aufnahmeausnehmung der Lagerschale für Lagerhülsen eingebaute Anlaufscheibe des Lagerkörpers oder eine Füllung mit einem Pulver, dessen Korndurchmesser die Spaltweite zwischen der Lagerschale und der Rotationslagerfläche übersteigt. Mit diesen Mitteln läßt sich eine jeweils gut anpaßbare Trockenlagerung der Rolle bzw. der Rotationslagerfläche dieser Rolle an einem Rollenende im Lagerkörper erreichen. Hierzu besteht das Dichtungselement aus Grafit, Kohlenstoff, Metalloxid, Siliziumkarbid oder einem wärmebeständigen Metall, oder aus einer wärmebeständigen Faserpackung.

Der Lagerkörper ist einstückig mit eingearbeiteten Abscheideausnehmungen, oder besteht aus mehreren, von keramischen Ringen auf Abstand gehaltenen Grafitscheiben. Die jeweilige Ausgestaltung wird entsprechend den Belastungen und der Herstellbarkeit ausgewählt.

Besonders vorteilhaft ist es, daß zumindest das ofenseitige Ende des ein Rollenende abstützenden Lagerkörpers in die Ofenwand oder in den Ofenraum hineinragend einbaubar ist. Auf diese Weise wird die Auswirkung des Temparaturgefälles zwischen dem Ofenraum und dem auf Normaltemperatur befindlichen Außenraum auf die Rolle begrenzt, was den Vorteil hat, daß der Rollenkörper und seine Bestandteile geringeren Wärmebelastungen unterworfen werden. An der Stelle des Rollenkörpers übernehmen die Bauteile des Lagers entsprechende Beanspruchungen, wobei die Temperaturgradienten von diesen Bauteilen besser aufgenommen werden können, weil sie zum Teil keine Drehbewegungen ausführen und mit geringeren spezifischen Belastungen konstruiert werden können.

Die Erfindung wird anhand von in der Zeichnung dargestellten Ausführungsbeispielen erläutert. Es zeigt:

| Fig. 1 | eine schematische Seitenansicht einer Verzinkungsanlage, |
|---|---|
| Fig. 2 | einen Längsschnitt einer ersten, jedoch nicht erfindungsgemäßen Rolle in schematischer Darstellung, |
| Fig. 3 | einen Längsschnitt durch eine zweite Rolle, die erfindungsgemäß ausgebildet ist, in schematischer Darstellung, |
| Fig. 4 | eine besondere Ausführung der Rolle der Fig. 3, |
| Fig. 5 | einen Längsschnitt einer dritten Rolle, die erfindungsgemäß ausgebildet ist, in schematischer Darstellung und die |
| Fig. 6 bis 9 | spezielle Rollenlagerungen. |

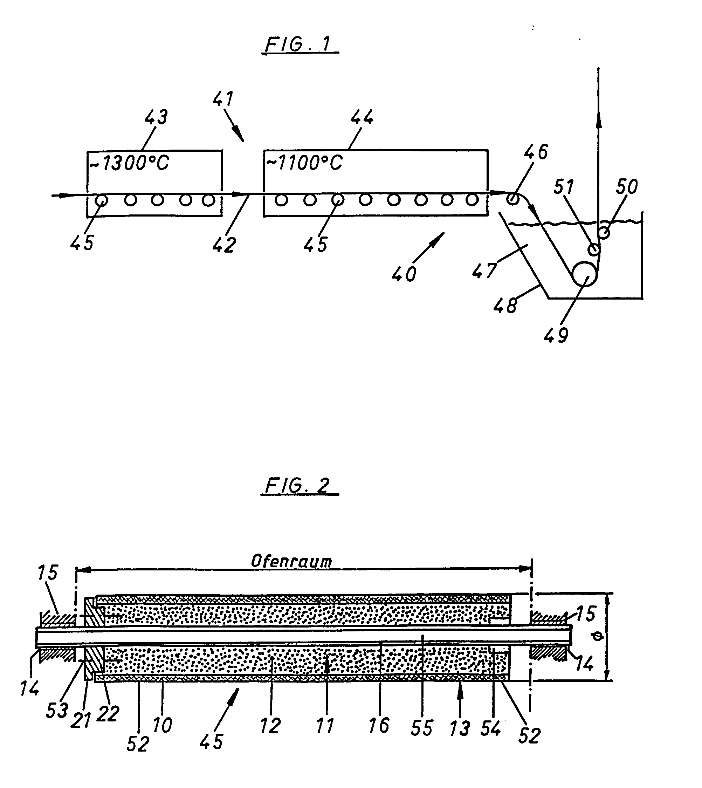

Fig. 1 zeigt in schematischer Darstellung eine übliche Feuerverzinkungsanlage 40 mit einer Durchlaufglühanlage 41, in der durchlaufendes Stahlband 42 behandelt wird. Die Behandlung erfolgt in einem Oxidationsofen 43 bei etwa 1300° C und anschließend in einem Reduktionsofen 44 bei etwa 1100° C. In diesen Öfen 43, 44 ist jeweils eine Vielzahl von Rollen 45 zur Förderung des Stahlbandes 42 angeordnet. Das vorbehandelte Stahlband 42 gelangt zu einer Ofenaustragrolle 46 und in ein mit Schmelze 47 gefülltes Bad 48. Die Badschmelze 47 besteht beispielsweise aus Zink, kann aber auch für andere Beschichtungszwecke aus anderen Nichteisenmetallen oder deren Legierungen oder Mischungen bestehen. Das in die Schmelze 47 eintauchende Stahlband wird von einer Badumlenkrolle 49 im dargestellten Sinne umgelenkt und mittels einer Stabilisationsrolle 50, gegen die das Stahlband 42 mit einer Andruckrolle 51 gehalten ist, aus der Schmelze 47 durch geeignete, nicht dargestellte Zugmittel fortlaufend entfernt.

Fig. 2 zeigt eine Rolle 45, die in einem der Öfen 43, 44 zum Einsatz kommen kann. Die Breite des Ofenraums ist bezeichnet, wobei es sich versteht, daß der Ofenraum durch eine mit endlichen Ausdehnungen versehene Wand begrenzt ist. Fig. 2 zeigt also, daß die Rolle 45 in außerhalb des Ofenraums angeordneten Rotationslagern 15 rotationsgelagert ist, die üblichen Aufbau haben, beispielsweise die dargestellten, nicht bezeichneten Lagerschalen aufweisen. Die Lager 15 sind in üblicher Weise ausgebildet, beispielsweise ist das linke Lager 15 ein Festlager, das die axiale Lage der Rolle 45 sichert, während das rechte Lager 15 ein Loslager ist, welches axiale Ausdehnungen der Rolle auszugleichen gestattet. Die Rolle 45 kann dann auch mit im Bereich des linken Lagers 15 angeordneten Antriebsmitteln angetrieben werden, beispielsweise mit einem Getriebemotor. Die Rolle 45 kann jedoch auch durch Bandzug mitgenommen werden.

Die Rolle 45 besteht im wesentlichen aus dem Rollenkörper 10, der einen Hohlraum 11 aufweist, in dem eine Stahlwelle 16 angeordnet ist. Der Rollenkörper 10 hat eine Förderfläche 13 und der im Bereich dieser Förderfläche 13 zwischen dem Rollenkörper 10 und der Metallwelle 16 verbleibende Hohlraum 11 ist mit Füllmittel 12 ausgefüllt. Die Enden 52 des Rollenkörpers 10 sind von in Fig. 2 nur links dargestellten Abschlußscheiben 21 verschlossen, so daß das Füllmittel 12 völlig abgeschirmt ist. Eine solche Abschlußscheibe 21 besteht beispielsweise aus keramischem Werkstoff. Sie ist zur besseren Abdichtung und Befestigung mit einem Absatz 22 versehen, mit dem sie in das Innere des Rollenkörpers 10 eingreift. Es sind mehrere Befestigungsstellen 53 vorhanden, die beispielsweise von keramischen Schrauben gebildet werden, welche in das Füllmittel 12 eingeschraubt sind und die Abschlußscheibe 21 dichtend am Ende 52 des Rollenkörpers 10 bzw. am Füllmittel 12 halten.

Auf der rechten Seite der Fig. 2 ist eine mechanische Verbindung der Metallwelle 16 mit dem Füllmittel 12 über Mitnehmer 54 dargestellt, die also eine drehfeste Verbindung zwischen der Metallwelle 16 und dem Füllmittel 12 zur Übertragung von Drehantriebskräften schaffen. Falls der Rollenkörper 10 mit dem Füllmittel 12 nicht drehfest verbunden ist, z. B. durch einen Sintervorgang, können entsprechende Mitnehmer auch zwischen dem Rollenkörper 10 und dem Füllmittel 12 vorgesehen werden.

Die Rolle 45 ist vorwiegend für einen Einsatzbereich von bis zu 1100 °C gedacht, also beispielsweise zum Einsatz im Ofen 44. Diese Begrenzung des Einsatzbereichs ist in erster Linie durch die Metallwelle 16 bedingt, deren thermische Belastbarkeit begrenzt ist. Für den Einsatz bei höheren Temperaturen wird die Metallwelle 16 vorzugsweise mit einem Kühlkanal versehen, durch den von außerhalb des Ofenraums Kühlmittel geleitet werden kann.

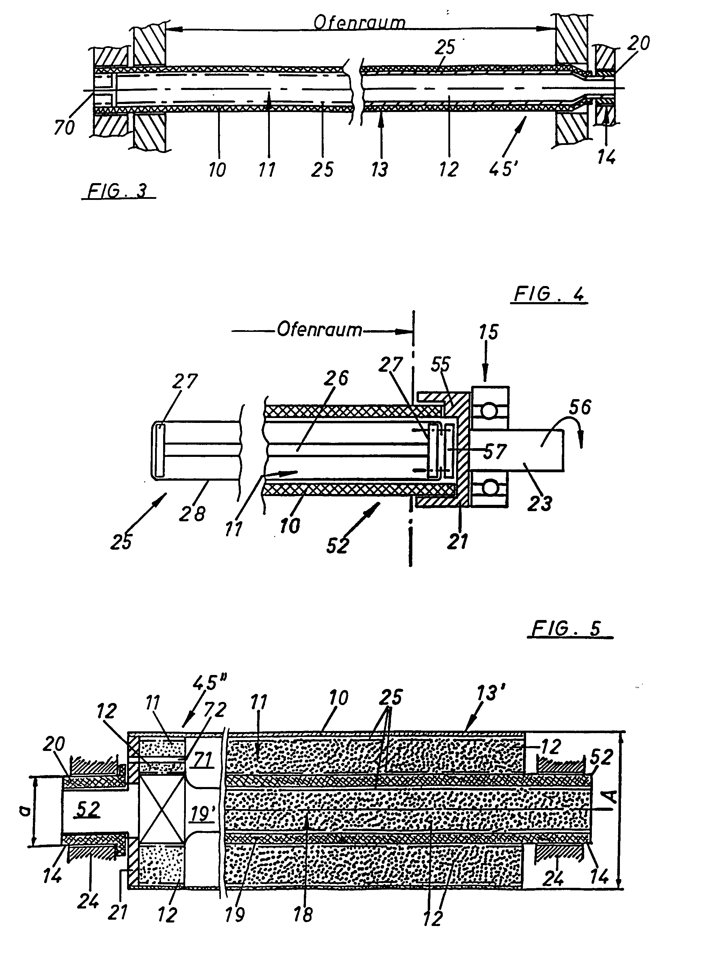

Die in Fig. 3 dargestellte Rolle 45′ besteht im wesentlichen nur aus dem Rollenkörper 10 und dem dessen Hohlraum 11 ausfüllenden Füllmittel 12, wobei der Rollenkörper 10 nicht nur im Bereich der durch den Ofenraum bestimmten Förderfläche 13 mit dem wärmebeständigen Füllmittel 12 ausgefüllt ist, sondern darüber hinaus auch im Bereich außerhalb des Ofenraums im Bereich der Rotationslagerfläche 14. Die an beiden Enden 52 des Rollenkörpers 10 vorhandenen Rotationslagerflächen 14 werden von den Außenumfangsflächen des Rollenkörpers 10 gebildet. Im rechten Teil der Fig. 3 ist der Rollenkörper 10 außerhalb des Ofenraums im Bereich der Rotationslagerfläche 14 durchmesserverringert ausgebildet. Das hat den Vorteil, daß fertige bzw. vorhandene Lager verwendet werden können. Es kann also beispielsweise auf bewährte Lager zurückgegriffen werden bzw. die Rolle kann bei bereits vorhandenen Anlagen in die dort vorhandenen Lager eingebaut werden. Der geringere Lagerdurchmesser hat außerdem den Vorteil geringeren Lagerreibungswiderstandes. Die in Fig. 3 als Kohlefasergrafitschicht dargestellte Zugbewehrungseinlage 25 trägt rollenendseitig einen Laufring bzw. eine für herkömmliche Lagerungen bestimmte Verschleißhülse 20, aus Stahl die aufgeschrumpft ist. An dieser Stelle, die sich außerhalb des Ofenraums befindet, ist der Rollenkörper 10 abgesetzt.

Die gesamte Rolle 45′ weist also - auch für ihre Lagerung -keine Bestandteile auf, die nicht wärmebeständig sind. Die Enden der Rolle 45′ sind gemäß Fig. 3 außerhalb des Ofenraums angeordnet, so daß durch die Ofenwand hindurch ein derart starkes Temperaturgefälle auftritt, daß die Lager 15 als übliche Kaltlager ausgeführt werden können, beispielsweise als Wälzlager. Die Temperaturgradienten werden von dem keramischen Werkstoff des Rollenkörpers 10 auch bei mechanischen Belastungen innerhalb des Ofenraums verkraftet. Das in den Enden 52 freiliegende Füllmittel 12 wird thermisch und chemisch nicht belastet. Es versteht sich jedoch, daß die Enden 52 auch abgedichtet werden können, etwa gemäß Fig. 2 Eine Rolle gemäß Fig. 3 ist vorzugsweise für den Einsatz im Hochtemperaturbereich geeignet, und zwar als ungekühlte Rolle, so daß keine durch Kühlung bedingten Energieverluste auftreten. Eine solche Rolle kann natürlich von außen angetrieben werden. Eine solche Antriebsausbildung ist in Fig. 4 für ein Ende 52 der Rolle 45′ gemäß Fig. 3 dargestellt. Der Rollenkörper 10 ist von einer Abschlußscheibe 21 verschlossen, die einen in den Rollenkörper 10 eingreifenden Mitnehmer 55 hat. Auch der bekannte Spreizdornantrieb ist möglich. Außerdem ist die Abschlußscheibe 21 mit einem Lagerzapfen 23 versehen, der in einem Rotationslager 15 gelagert ist, beispielsweise einem Kugellager, und an dem ein Drehantrieb angreift, der durch den Pfeil 56 symbolisiert wird. Diese Anordnung sitzt außerhalb des Ofenraums, also im Kalten.

Das linke Ende der Rolle 10 der Fig. 3 ist mit einem Gasleitungsanschluß 70 versehen, durch den ein Inertgas in das Innere des Rollenkörpers geleitet werden kann. Falls der vom Füllmittel 12 ausgefüllte Innenraum Spalte hat oder im Laufe des Betriebs aufweist, oder falls das Füllmittel 12 nicht gasdicht mit dem Rollenkörper 10 verbunden ist, kann Inertgas in die Spalte bzw. zwischen das Füllmittel 12 und den Rollenkörper 10 eindringen und für dessen Abschluß gegen aggressive Außenatmosphäre sorgen, so daß Oxidation bzw. auch Korrosion vermieden werden können.

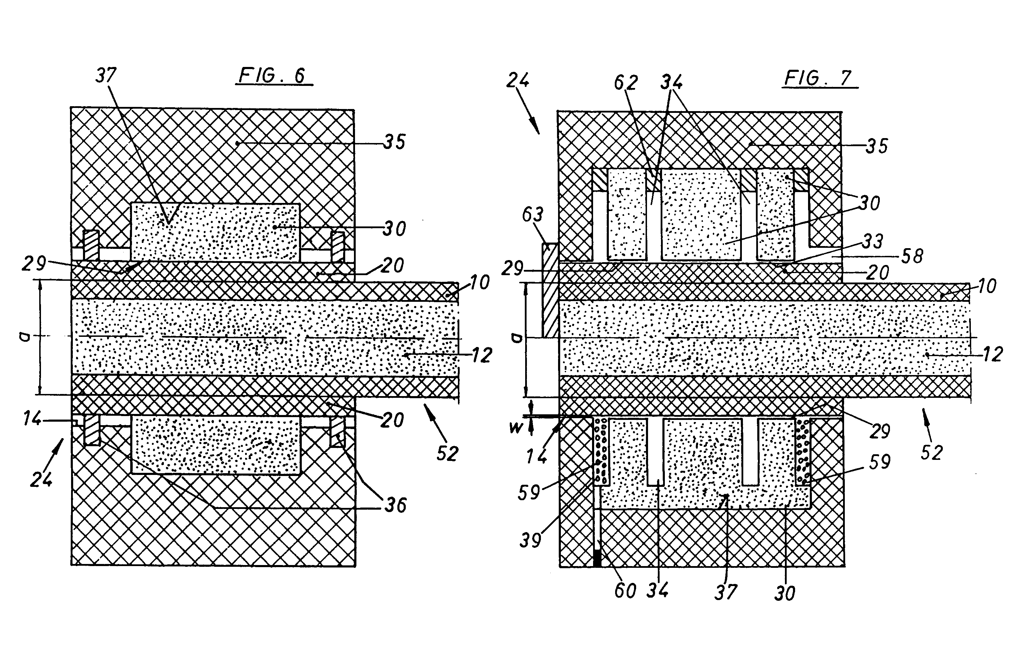

Fig. 5 zeigt eine Ausgestaltung einer Rolle 45″ in links und rechts unterschiedlichen Ausgestaltungen. Beiden Ausgestaltungen gemeinsam ist der Rollenkörper 10, der eine Außenförderfläche 13′ hat und dessen Hohlraum 11 als Ringraum gestaltet ist. Die innere Begrenzung des Hohlraums 11 bildet ein Koaxialzylinder 19 oder eine gleichachsig angeordnete Lagerwelle 19′. Beide Bauteile 19, 19′ haben an ihren Enden 52 je eine Rotationslagerfläche 14 für die schematisch dargestellten Lager 24. Das linke Ende 52 ist mit einer Verschleißhülse 20 versehen. In beiden Ausführungsformen der Fig. 5 sind Zugbewehrungseinlagen 25 in der Nähe des Rollenkörpers 10 und in der Nähe des Koaxialzylinders 19 bzw. der Lagerwelle 19′ dargestellt. Bei dem rechten Ausführungsbeispiel der Fig. 5 ist der Hohlraum 11 des Rollenkörpers 10 vollständig mit Füllmittel 12 ausgefüllt, während bei der linken Ausführungsform nur jeweils endseitig Füllmittel 12 vorhanden ist, und zwar in Form von Ringen. Dadurch und durch die Verringerung des Außendurchmessers der Lagerwelle 19 ergibt sich ein Flutraum 71. Lagerseitig ist der Hohlraum 11 durch eine Abschlußscheibe 21 verschlossen. Die Lagerwelle 19′ ist im Bereich des Füllmittels 12 zur besseren Kraftübertragung vierkantig ausgebildet. Zur Verklammerung des Füllmittels 12 mit dem Rollenkörper 10 können in dessen Innenwand nichtdargestellte Mitnahmenuten eingearbeitet sein. Es versteht sich, daß auch der Koaxialzylinder 19 entsprechend formschlüssig ausgebildet sein kann.

In der linken Hälfte der Fig. 5 dient der Flutraum 71 insbesondere bei großen Rollendurchmessern von Rollen, die beispielsweise in Metallschmelzebädern eingesetzt werden, der Verringerung des Rollenauftriebs dadurch, daß der Flutraum 71 von Schmelze erfüllt wird, weil sich das Füllmittel 12 nur jeweils an den Außenenden des Rollenkörpers 10 befindet, wo es, wie auch die Abdeckscheibe 21, Flutöffnungen 72 aufweist.

Die in Fig. 5 dargestellte Rolle 45″ ist insbesondere für den Einsatz in Heißbeschichtungsanlagen konzipiert, also beispielsweise in Nichteisenmetall-Schmelzebädern, in denen sie als Umlenkrolle 49, Andrückrolle 51 oder Stabilisierungsrolle 50 gemäß Fig. 1 verwendet werden kann.

Die Rollen der Fig. 3 bis 5 sind mit Zugbewehrungseinlagen 25 versehen, die vorzugsweise in der Nähe der keramischen Bauteile vorhanden sind, also in der Nähe des Koaxialkörpers 19 und des Rollenkörpers 10, bei diesem zumindest jeweils innen. Eine solche Zugbewehrungseinlage 25 besteht insbesondere aus einem Faserwerkstoff, also beispielsweise aus hochfesten Fäden oder daraus hergestellten Stoffen, insbesondere Geweben. Material des Faserwerkstoffs kann beispielsweise eine Karbon-, Glas-, Keramik- oder Siliziumfaser sein, die sehr leicht und trotzdem über 1100°C hinaus hitzebeständig ist. In hinreichend wärmegeschützten Bereichen der Rolle kann die Zugbewehrungseinlage auch aus weniger wärmebeständigem, dafür aber mechanisch belastbarerem Material bestehen.

Die Formgebung der Zugbewehrungseinlage erfolgt in Abstimmung auf das Füllmittel 12. Wird dieses beispielsweise als formsteifer Körper hergestellt, so kann dies in Verbindung mit dem Einlegen der Zugbewehrungseinlage erfolgen, die dann beispielsweise als Bandwerkstoff auf- bzw. eingewickelt wird. Ist das Füllmittel jedoch ein Pulver, welches entweder seine Pulverform im Inneren des Rollenkörpers 10 beibehält oder zuvor oder in Verbindung mit dem Rollenkörper 10 und/oder mit dem Koaxialkörper 19 einem Sinterungsvorgang unterworfen wird, muß die Zugbewehrungseinlage einen eigensteifen Körper bilden. Ein solcher eigensteifer Körper ist in Fig. 4 beispielsweise dargestellt und besteht im wesentlichen aus zwei im Abstand voneinander gehaltenen Formscheiben 27 z.B. aus Stahl oder Keramik, wobei die Abstandshalterung von einem keramischen Stab 26 oder Hohlkörper vorgenommen wird. Diese Baugruppe wird von Faserwerkstoff 28 umschlossen, also beispielsweise herumgelegte Fäden oder herumgelegtes großporiges Gewebe, so daß das Füllmittel 12 bzw. das Pulver in das Innere des eigensteifen Körpers eingebracht bzw. eingerüttelt werden kann. Der Faserwerkstoff wird an der rechten Formscheibe 27 durch eine Klemmplatte 57 festgehalten.

Es ist auch möglich, daß die Formscheiben 27 durch einen keramischen Hohlkörper 26 an ihren Außendurchmessern gegeneinander auf Abstand gehalten werden, und die Faserwerkstoffe 28 dann axial ein Zugseil bilden und mit der Klemmplatte 57 verspannt werden. Indem die Klemmplatte 57 eine Bolzenverbindung durch den Lagerzapfen 23 nach außen erhält, ist ein Nachspannen der Zugbewehrung gegeben. Eine solche Zugbewehrung könnte in einem Hohlraum des Füllmittels 12 angeordnet sein. Eine solche Konzeption eignet sich besonders für den Einsatz großer Rollendurchmesser in NE-Matellschmelzen mit geflutetem Innenraum oder auch für Ofenrollen. Für einen einwandfreien Rundlauf der Rollen müssen die Lagerungen entsprechend konzipiert werden.

Aus Fig. 5 läßt sich ableiten, daß die dort dargestellte Rolle unterschiedlich große Außendurchmesser A bei jeweils ungeänderten Lagerdurchmessern a der Rotationslagerfläche 14 des Rollenkörpers 10 haben kann. Infolgedessen können Rollen 45'' mit unterschiedlichen Außendurchmessern A in einem Rotationslager 24 gelagert werden, das nur eine einzige Baugröße zu haben braucht. Derartige Lager sind in den Fig. 6 bis 8 dargestellt.

Aus Fig. 6 bis 8 ist ersichtlich, daß die Ausbildung des Endes 52 des Hohlkörpers 10 jeweils identisch ist. Es entspricht den Darstellungen der Fig. 3, 5. Dabei versteht sich, daß der Füllstoff 12 bedarfsweise beispielsweise gemäß Fig. 2 oder Fig. 4 gegen chemische Beanspruchung mit einer Abschlußscheibe 21 gegen Außeneinwirkung abgeschlossen wird, wenn dies aufgrund des Einsatzes der betreffenden Rolle in einer Badschmelze erforderlich ist.

Die Enden der Rollenkörper 10 sind jeweils mit einer Verschleißhülse 20 versehen, die aus keramischem oder korrosionsbeständigem Werkstoff besteht. Die Verschleißhülse 20 erlaubt es, auch größeren Verschleiß bei der Lagerung der Rolle zuzulassen, oder einen Werkstoff auszuwählen, der der Lagerung besser dienlich ist, als der des Rollenkörpers 10, insbesondere in Abstimmung auf einen Lagerkörper 30 des Rotationslagers 24. Die Verschleißhülse 20 ist auswechselbar. Sie wurde in Fig. 9 nicht dargestellt, kann jedoch entsprechend angeordnet werden.

Das Rotationslager 24 besteht im wesentlichen aus einer beispielsweise zweigeteilten Lagerschale 35, die gemeinsam mit der Verschleißhülse 20 bzw. dem Ende 52 des Rollenkörpers 10 einen Lagerkörper 30 im wesentlichen umschließt. Dieser Lagerkörper 30 hat ungeachtet seiner jeweiligen in den Fig. 6 bis 9 dargestellten konstruktiven Ausbildung eine Traglagerfläche 29 für eine Verschleißhülse 20 und besteht aus Grafit, Kohlenstoff, Metalloxid od. dgl. bzw. ist damit versehen. Die Auswahl der konstruktiven Bestandteile des Lagerkörpers 30 wird in Abstimmung auf die Ausbildung der Verschleißhülse 20 bzw. des Rollenkörpers 10 vorgenommen. Beispielsweise kann auch Siliziumkarbid verwendet werden.

Das Lager der Fig. 6 ist als Trockenlager ausgebildet. Der in der Mitte liegende Lagerkörper 30 ist beidseitig gegen die Rotationslagerfläche 14 der Verschleißhülse 20 mit Dichtungselementen 36 abgedichtet. Das Lagerspiel zwischen dem Lagerkörper 30 und der Verschleißhülse 20 ist dementsprechend gering. Es ist mit einem nur geringen Verschleiß zu rechnen, wobei die Verschleißprodukte im Lager eingekapselt bleiben und noch schmierend wirken, weil der in erster Linie verschleißende Lagerkörper 30 vornehmlich aus schmierfähigem Lagerwerkstoff besteht. Ein derartiges Lager gewährleistet also eine Präzisionsführung der Rolle.

Das Rotationslager 24 der Fig. 7 hat einen Lagerkörper 30 mit verschleißhülsenseitig offenen Abscheideausnehmungen 34 und einem rechts oben dargestellten größeren Abstand 58 zwischen der Lagerschale 35 und der Verschleißhülse 20. Außerdem ist das Lagerspiel 33 bzw. der Abstand zwischen der Traglagerfläche 29 des Lagerkörpers 30 und der Verschleißhülse 20 so groß bemessen, daß Schmelzezutritt möglich ist und infolgedessen eine Schmierung des Lagers 24 durch die Badschmelze erfolgt. Dabei werden die Ausnehmungen 34 mehr oder weniger durch die Badschmelze gefüllt und sich etwa einstellender Abrieb des Lagerkörpers 30 in den Ausnehmungen 34 separiert, so daß dieser Abrieb nicht in die Badschmelze gelangen kann, wo er wegen der Beeinträchtigung der Beschichtung des Bandes 42 unerwünscht ist. Es versteht sich, daß diese Ausbildung des Rotationslagers 24 rotationssymmetrisch vorhanden ist. Die offene Stirnseite des Lagers bzw. der Lagerschale 35 ist mit einer daran dicht befestigten Verschlußscheibe 63 abgedichtet, die zugleich als Axialanlauf des Rollenkörpers 10 dient. In Fig. 7 ist zur Vereinfachung unten eine andere Art der Ausbildung des Rotationslagers 24 dargestellt, die im Einsatzfall ebenfalls rotationssymmetrisch vorzusehen ist. Diese Abdichtung stellt eine Pulverabdichtung dar, bei der Ausnehmungen 59 des Lagerkörpers 30 oder auch der Lagerschale 35 jeweils mit einer Pulverfüllung 39 versehen sind, die für eine Abdichtung zwischen dem Lagerkörper 30 und der Verschleißhülse 20 sorgen. Dabei ist die Körnung der über die Füllbohrung 60 eingebrachten Füllung 39 größer, als die Spaltweite w, so daß das Pulver nicht entweichen kann. Das Pulver besteht beispielsweise aus einem Metalloxid und hat insbesondere die gleiche oder eine geringere Härte wie die Verschleißhülse 20, so daß diese nicht abgeschmirgelt werden kann. Sich etwa ergebender Verschleiß des Lagerkörpers 30 bleibt im Inneren des Rotationslagers 24 eingeschlossen, beispielsweise in den Ausnehmungen 34.

Die Verschleißhülse kann so ausgelegt werden, das der Verschleiß an der Hülse stattfindet, die bedarfsweise ausgewechselt wird, so daß die Rolle weiterhin verwendet werden kann.

Fig. 7 zeigt oben und unten unterschiedliche Ausbildungen des Lagerkörpers 30. Letzterer ist unten mit Abscheideausnehmungen 34 versehen, die durch Einschneiden hergestellt sind, beispielsweise durch Einfräsen. Der Lagerkörper 30 ist in diesem Fall einstückig. In der oberen Hälfte der Fig. 7 besteht der Lagerkörper 30 aus mehreren, nämlich aus drei Teilen, die voneinander durch Distanzringe 62 auf Abstand gehalten sind, so daß sich dementsprechend breite Ausnehmungen 34 ergeben.

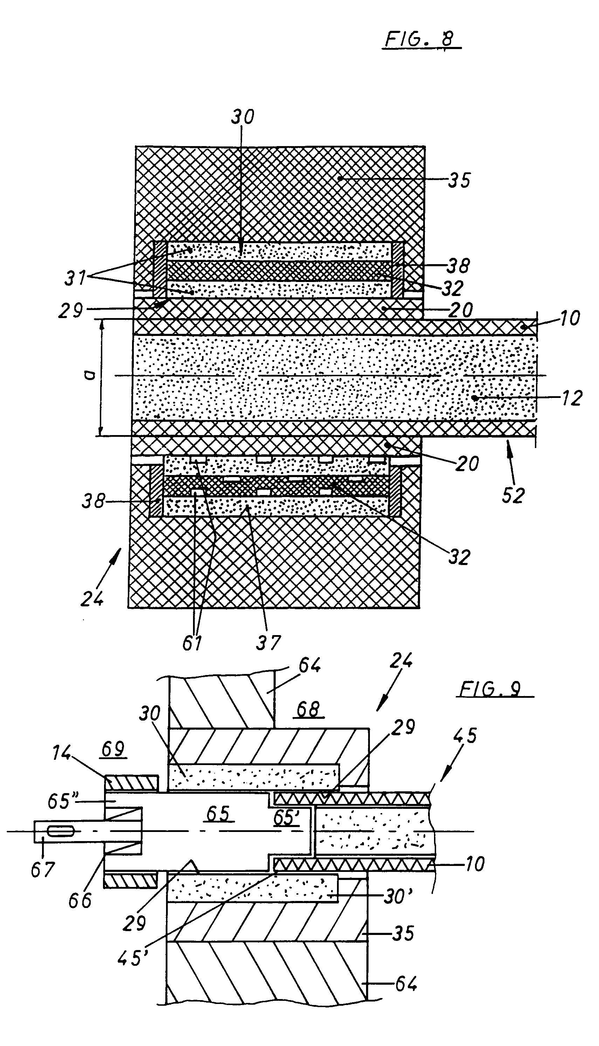

Das in Fig. 8 dargestellte Rotationslager 24 hat einen dreiteiligen Lagerkörper 30, der aus einer mittleren Lagerhülse 32 keramischen Werkstoffs und zwei konzentrischen, innerhalb und außerhalb dieser Lagerhülse 32 angeordneten relativbeweglichen Lagerhülsen 31 besteht. Alle drei Lagerhülsen 31, 32 können sich relativ zueinander und relativ zu der Verschleißhülse 20 bzw. relativ zu der Lagerschale 35 um dieselbe Achse verdrehen, nämlich die Rollenachse. Die Lagerhülsen 31, 32 sind im wesentlichen in eine Aufnahmeausnehmung 37 der Lagerschale 35 eingebaut, zusammen mit beidseitig angeordneten Anlaufscheiben 38, zwischen denen die keramische Lagerhülse 32 als Abstandhalter wirkt, so daß die insbesondere auf eine Lagerungsfunktion abgestimmten Lagerhülsen 31 mit dem erforderlichen Lagerspiel versehen und infolgedessen optimal auf niedrige Reibungswerte eingestellt werden können.

Das Rotationslager 24 der Fig. 8 kann für Trockenlauf und für Flüssigschmierung mit Badschmelze ausgelegt werden. In der oberen Hälfte der Fig. 8 sind die Anlaufscheiben 38 zugleich als Dichtungselemente ausgebildet, die die Lagerhülsen 31, 32 dichtend einschließen. Der sich bei diesem Betrieb ergebende Abrieb verbleibt innerhalb des Lagers und wirkt weiter als Schmierstoff. In der unteren Hälfte der Fig. 8 haben die Anlaufscheiben 38 Abstand von der Verschleißhülse 20, so daß Schmelzezutritt möglich ist. Die Lagerhülsen 31, 32 sind für diesen Fall mit entsprechend größerem Lagerspiel bemessen. Außerdem ist die Lagerhülse 32 mit schematisch angedeuteten Dehnungskammern 61 versehen, so daß die Schmelze beim Erstarren infolge einer Abkühlung bei einer Badentnahme des Rotationslagers 24 Raum zur Volumenänderung hat. Die Dehnungskammern 61 der inneren Lagerhülse 31 können ebenfalls auftretenden Grafitabrieb speichern, um ihn nicht ins Bad gelangen zu lassen.

Das Dichtungselement 36 des Rotationslagers 24 der Fig. 6 bzw. die Anlaufscheibe 38 im Falle der Trockenschmierung des Rotationslagers 24 der Fig. 8 sind jeweils aus dem geeigneten Werkstoff, beispielsweise aus einem wärmebeständigen Metall hergestellt, insbesondere im Fall der Anlaufscheibe 38. Es kann jedoch aber auch Grafit verwendet werden bzw. eine wärmebeständige Faserpackung od. dgl.

Als keramischer Werkstoff für die Rolle bzw. für deren Rollenkörper 10 und für deren Koaxialkörper 19 kommt insbesondere solche Keramik zum Einsatz, die in einem thermischen Spritzverfahren hergestellt wurde. Derartige Keramik, insbesondere Oxydkeramik ist schlagunempfindlich, widerstandsfähig, zäh, thermowechselbeständig und hochtemperaturfest. Ihre Festigkeit ist ausreichend, um allen nach ihrer Herstellung erfolgenden Weiterverarbeitungsvorgängen zu genügen. Die Herstellung des Rollenkörpers 10 oder des Koaxialkörpers 19 erfolgen beispielsweise nach dem in der DE-PS 30 01 371 beschriebenen Verfahren. Nach diesem Verfahren hergestellte Rollen bzw. Rollenteile genügen den Anforderungen nach ihrer Ausrüstung mit einem wärmebeständigen Füllmittel besonders gut, wenn dieses einen Ausdehnungskoeffizienten aufweist, der dem des keramischen Werkstoffs des nach einem thermischen Spritzverfahren, insbesondere einem wasserstabilisierten Plasma-Flammspritzverfahren hergestellten Rollenteils entspricht.

Fig. 9 zeigt den Einbau einer Rolle 45 in eine Ofenwand 64, wobei das Rotationslager 24 die Abtragung der Lasten der Rolle 45 in die Ofenwand 64 übernimmt. Die Lagerschale 35 umschließt den Lagerkörper 30 zumindest ofenraumseitig und ist tragend mit der Ofenwand 64 verbunden. Der Lagerkörper 30 ist so bemessen, daß er die zur Abstützung des Rollenendes 45′ erforderlichen Kräfte bei geringer spezifischer Belastung aufbringt. Gemäß der Darstellung ragt das Rollenende 45′ etwa nur zur Hälfte in das Rotationslager 24 hinein. Die andere Hälfte nimmt ein Zwischenstück 65 ein, das an einem Ende 65′ drehfest mit dem Rollenkörper 10 verbunden ist und an seinem anderen Ende 65″ einen mit einer Spreizbüchse 66 festsitzenden Antriebszapfen 67 hat. Infolgedessen kann die Rolle 45 mit einem Antrieb drehangetrieben werden, der außerhalb des Ofenraums 68 angeordnet ist. Das Temperaturgefälle der drehangetriebenen Teile wird zu einem großen Teil vom Zwischenstück 65 übernommen, welches bedarfsweise ebenfalls entsprechend wärmebeständig ausgebildet werden kann. Fig. 9 zeigt in der unteren Hälfte den Einbau des Rotationslagers 24 in die Ofenwand 64 derart, daß deren gesamte Breite eingenommen wird. Bei besonders großer Temperaturdifferenz zwischen Ofenraum 68 und Außenraum 69 bzw. um Spannungsbeanspruchungen von der Rolle 45 bzw. deren Rotationskörper 10 möglichst weitgehend fernzuhalten, kann das Rotationslager 24 aber auch in den Ofenraum 68 hineinragen, wie es in der oberen Hälfte der Fig. 9 dargestellt ist, so daß also auch der Lagerkörper 30 selbst entsprechend weit in den Ofenraum 68 hineinragt.

**Patentansprüche**

1. Rolle (45) für Fördergut von Durchlaufofen- und Heißbeschichtungsanlagen, mit einem aus hitze- und/oder korrosionbeständigem keramischem Werkstoff bestehenden hohlen Rollenkörper (10), dessen Hohlraum (11) zumindest im Bereich innerhalb seiner Förderfläche (13,13') mit einem wärmebeständigen Füllmittel (12) gefüllt ist, das mindestens einen Formkörper bildet und einen dem Werkstoff des Rollenkörpers (10) etwa entsprechenden Ausdehnungskoeffizienten aufweist, und mit einer außerhalb des Durchlaufbereichs der Anlage angeordneten Rotationslagerfläche (14), **dadurch gekennzeichnet,** daß der Rollenkörper (10) aus einem thermisch gespritzten keramischen Werkstoff besteht, daß das Füllmittel (12) Grafit, Kohlenstoff, Metalloxid oder Siliziumkarbid ist, und daß Füllmittel (12) im Bereich der Rotationslagerfläche (14) vorhanden ist.

2. Rolle nach Anspruch 1, **dadurch gekennzeichnet,** daß der Rollenkörper (10) und/oder eine Zugbewehrungseinlage (25) zumindest an einem Ende eine Rotationslagerfläche (14) für Rotationslager (24) hat und das Füllmittel (12) auch das Lagerende des Rollenkörpers (10) vollständig ausfüllt und/oder daß der Rollenkörper (10) im Bereich der Rotationslagerfläche (14) durchmesserverringert ist.

3. Rolle nach einem der Ansprüche 1 oder 2, **dadurch gekennzeichnet,** daß innerhalb des Rollenkörpers (10) ein Koaxialzylinder (19) mit Abstand zum Rollenkörper (10) angeordnet ist, daß der zwischen dem Rollenkörper (10) und dem Koaxialzylinder (19) befindliche Hohlraum (11) zumindest teilweise mit Füllmittel (12) gefüllt ist, und daß an den Enden (52) des Koaxialzylinders (19) je eine Rotationslagerfläche (14) vorhanden ist.

4. Rolle nach einem der Ansprüche 1 bis 3, **dadurch gekennzeichnet,** daß das den Formkörper bildende Füllmittel (12) in dem Hohlraum (11,18) des Koaxialzylinders (19) und/oder des Rollenkörpers (10) ein- oder mehrstückig angeordnet und mit dem Rollenkörper (10) und/oder mit dem Koaxialzylinder (19) versintert, durch Verdichtung verbunden, verklebt formschlüssig drehfest verbunden oder davon lose ist.

5. Rolle nach einem der Ansprüche 1 bis 4, **dadurch gekennzeichnet,** daß auf der Rotationslagerfläche (14) eine keramische oder aus korrosionsbeständigem Werkstoff bestehende Verschleißhülse (20) angeordnet ist.

6. Rolle nach einem der Ansprüche 1 bis 5, **dadurch gekennzeichnet,** daß an mindestens einem Ende des Rollenkörpers (10) und/oder des Koaxialkörpers (19) eine das Füllmittel (12) abschirmende Abschlußscheibe (21) angeordnet ist.

7. Rolle nach Anspruch 6, **dadurch gekennzeichnet,** daß die Abschlußscheibe (21) mit einem Absatz (22) in das Innere des Rollenkörpers (10) und/oder des Koaxialkörpers (19) und/oder einer Zugbewehrungseinlage (25) eingesetzt und damit und/oder mit dem Füllmittel (12) axial fest und/ oder verdrehfest verbunden ist, oder daß die Abschlußscheibe (21) den Rollenkörper (10) und/oder den Koaxialkörper (19) außen umgreift und daran festsitzt und/oder daß die Abschlußscheibe (21) einen Achslagerzapfen (23) für das Rotationslager (15) aufweist.

8. Rolle nach einem der Ansprüche 1 bis 7, **dadurch gekennzeichnet,** daß im Hohlraum (11,18) des Rollenkörpers (10) und/oder des Koaxialkörpers (19) Zugbewehrungseinlagen (25) in der Nähe der keramischen Bauteile vorhanden sind.

9. Rolle nach Anspruch 8, **dadurch gekennzeichnet**, daß eine Zugbewehrungseinlage (25) mit dem Füllmittel (12) unlösbar verbunden und/oder ein eigensteifer und/oder vorgespannter, mit Füllmittel (12) füllbarer Körper ist.

10. Rolle nach Anspruch 9, **dadurch gekennzeichnet,** daß der im Inneren des Rollenkörpers (10) und/oder des Koaxialkörpers (19) angeordnete eigensteife Körper zwei durch einen keramischen Stab (26) auf Abstand gehaltene Formscheiben (27) hat und von diese Bauteile zusammenhaltendem Faserwerkstoff (28) umschlossen oder durchsetzt ist und/oder ein aus der Rolle (45') herausgeführtes Zugende hat.

**11.** Rolle nach einem der Ansprüche 1 bis 10, **dadurch gekennzeichnet,** daß sie einen Gaseinleitungsanschluß (70) für den Hohlraum (11) des Rollenkörpers (10) und/oder mindestens einen Anschluß für elektrische Energie hat.

**12.** Rolle mit einem Rotationslager, nach einem der Ansprüche 1 bis 11, **dadurch gekennzeichnet,** daß das Rotationslager (24) der Rolle mit mindestens einer Traglagerfläche (29) eines Grafit, Kohlenstoff, Siliziumkarbid oder Metalloxid aufweisenden Lagerkörpers (30) ausgerüstet ist.

**13.** Rolle nach Anspruch 12, **dadurch gekennzeichnet,** daß der Lagerkörper (30) aus zwei konzentrischen, in einer Lagerschale (35) relativbeweglichen Lagerhülsen (31) besteht, zwischen denen eine keramische Lagerhülse (32) relativbeweglich angeordnet ist.

**14.** Rolle nach Anspruch 12 oder 13, **dadurch gekennzeichnet,** daß der Lagerkörper (30) der Rolle mit Schmelzezutritt gestattendem Lagerspiel (33) versehen ist und vertikale, eine Trennung des Abriebs des Lagerkörpers (30) gestattende Abscheideausnehmungen (34) und/oder Schmelzedehnungskammern (61) aufweist.

**15.** Rolle nach Anspruch 12 oder 13, **dadurch gekennzeichnet,** daß der Lagerkörper (10) der Rolle von einer Lagerschale (35) umschlossen ist, die beidseitig des Lagerkörpers (30) mit Dichtungselementen (36) an der Rotationslagerfläche (14) der Rolle abgedichtet ist.

**16.** Rolle nach Anspruch 15, **dadurch gekennzeichnet,** daß ein Dichtungselement (36) ein Dichtungsring, eine in eine Aufnahmeausnehmung (37) der Lagerschale (35), für Lagerhülsen (31,32) eingebaute Anlaufscheibe (38,63) des Lagerkörpers (30) oder eine Füllung (39) mit einem Pulver ist, dessen Korndurchmesser die Spaltweite (w) zwischen der Lagerschale (35) und der Rotationslagerfläche (14) übersteigt.

**17.** Rolle nach Anspruch 15 oder 16, **dadurch gekennzeichnet,** daß das Dichtungselement (36) aus Grafit, Kohlenstoff, Metalloxid, Siliziumkarbid oder einem wärmebeständigen Metall besteht, oder aus einer wärmebeständigen Faserpackung.

**18.** Rolle nach einem der Ansprüche 12 bis 17, **dadurch gekennzeichnet,** daß der Lagerkörper (30) einstückig mit eingearbeiteten Abscheideausnehmungen (34) ist, oder aus mehreren, von keramischen Ringen (62) auf Abstand gehaltenen Grafitscheiben besteht.

**19.** Rolle nach einem der Ansprüche 12 bis 18, dadurch ge**kennzeichnet,** daß zumindest das ofenseitige Ende (30') des ein Rollenende (45') abstützenden Lagerkörpers (30) in die Ofenwand (64) oder in den Ofenraum (68) hineinragend einbaubar ist.

**Claims**

**1.** Roller (45) for conveyed goods of continuous furnaces and hot-coating plant, comprising a hollow roller body (10) of heat-resistant and/or corrosion-resistant ceramic material having a hollow chamber (11) which is filled at least in the region within its transportation surface (13, 13') with a heat-resistant filling material (12), the filling material forming at least one shaped body and having a coefficient of expansion which corresponds approximately to that of the material of the roller body (10), and a rotational bearing surface (14) arranged outside the transit region of the plant, characterised in that the roller body (10) consists of a thermal die-cast ceramic material, the filling material (12) is graphite, carbon, metal oxide or silicon carbide, and filling material (12) is provided in the region of the rotational bearing surface (14).

**2.** Roller according to claim 1, characterised in that the roller body (10) and/or a tensile reinforcement insert (25) have, at least at one end, a rotational bearing surface (14) for a rotary bearing (24), and the filling material (12) completely fills the bearing end of the roller body (10) and/or the roller body (10) is reduced in diameter in the region of the rotational bearing surface (14).

**3.** Roller according to one of claims 1 or 2, characterised in that within the roller body (10) there is arranged a coaxial cylinder (19) spaced from the roller body (10), the hollow chamber (11) between the roller body (10) and the coaxial cylinder (19) is at least partially filled with filling material (12), and a rotational bearing surface (14) is provided at each of the ends (52) of the coaxial cylinder (19).

**4.** Roller according to one of claims 1 to 3, characterised in that the filling material (12) forming the shaped body is arranged in one or more pieces in the hollow chamber (11, 18) of the coaxial cylinder (19) and/or of the roller body (10), and wherein the filling material is connected to the roller body (10) and/or to the coaxial cylinder (19) so as to be rotatable therewith by sintering, by compression, or by adhesive, or is free therefrom.

5. Roller according to one of claims 1 to 4, characterised in that a wear sleeve (20) of ceramic or corrosion-resistant material is provided at the rotational bearing surfaces (14).

6. Roller according to one of claims 1 to 5, characterised in that a closure plate (21) which screens off the filling material (12) is provided at at least one end of the roller body (10) and/or of the coaxial body (19).

7. Roller according to claim 6, characterised in that the closure plates (21) each have a spigot (22) which is inserted into the interior of the roller body (10) and/or of the coaxial body (19) and/or of a tensile reinforcement insert (25) and are axially fast and/or rotationally fast therewith and/or with the filling material (12) or in that the closure plates (21) engage the outside of the roller body (10) and/or the coaxial body (19) and are seated fixedly thereon, and/or in that the closure plates (21) have an axial bearing pin (23) for the rotational bearing (15).

8. Roller according to one of claims 1 to 7, characterised in that in the hollow chamber (11, 18) of the roller body (10) and/or of the coaxial body (19) there are provided tensile reinforcement inserts (25) in the region of the ceramic components.

9. Roller according to claim 8, characterised in that a tensile reinforcement insert (25) is connected undetachably with the filling material (12) and/or is an inherently rigid and/or pretensioned body which can be filled with filling material (12).

10. Roller according to claim 9, characterised in that the inherently rigid body arranged within the roller body (10) and/or the coaxial body (19) has two shaped plates (27) held apart by a ceramic rod (26), and is enclosed by or is traversed by fibrous material (28) which unites these components and/or has a tensile end projecting from the roller (45').

11. Roller according to one of claims 1 to 10, characterised in that it has a gas-inlet fitting (70) for the hollow chamber (11) of the roller body (10) and/or at least one terminal for electrical energy.

12. Roller having a rotational bearing, according to one of claims 1 to 11, characterised in that the rotational bearing (24) of the roller is equipped with at least one journal bearing surface (29) of a bearing member (30) of graphite, carbon, silicon carbide or metal oxide.

13. Roller according to claim 12, characterised in that the bearing member (30) consists of two concentric bearing sleeves (31) which are relatively movable within a bearing shell (35) and between which is arranged a ceramic bearing sleeve (32) which is movable relative thereto.

14. Roller according to claim 12 or 13, characterised in that the bearing member (30) of the roller is provided with bearing play (33) which permits entry of melt, and the bearing member has vertical separating recesses (34) and/or melt expansion chambers (61) to receive wear products of the bearing member (30).

15. Roller according to claim 12 or 13, characterised in that the bearing body (10) of the roller is enclosed by a bearing shell (35) which on both sides of the bearing member (30) is sealed off from the rotational bearing surface (14) of the roller by sealing elements (36).

16. Roller according to claim 15, characterised in that a sealing element (36) is a sealing ring, an end plate (38, 63) of the bearing member (30) inserted into a recess (37) of the bearing shell (35) for bearing sleeves (31, 32), or a powder filling (39) whose grain size exceeds the gap width (w) between the bearing shell (35) and the rotational bearing surface (14).

17. Roller according to claim 15 or 16, characterised in that the sealing element (36) is of graphite, carbon, metal oxide, silicon carbide or a heat-resistant metal, or is of a heat-resistant fibre packing.

18. Roller according to one of claims 12 to 17, characterised in that the bearing member (30) is a one-piece component with separating recesses (34) machined therein, or is made of a plurality of graphite plates held apart by ceramic rings (62).

19. Roller according to one of claims 12 to 18, characterised in that at least the furnace-side end (30') of the bearing member (30) supporting one roller end (45') is built into the furnace wall (64) or projects into the furnace chamber (68).

## Revendications

1. Rouleau (45) pour produits à transporter sur des installations de four continu et sur des installations d'enduction à chaud, comportant un corps de rouleau creux (10) formé d'une matière céramique réfractaire et/ou résistante à la corrosion et dont l'espace creux (11) est rempli, au moins dans la zone comprise à l'intérieur de sa surface de transport (13, 13'), d'un agent de remplissage (12) résistant à la chaleur qui définit au moins un corps moulé et présente un coefficient de dilatation correspondant approximativement à la matière du corps de rouleau (10), et comportant une surface formant palier de rotation (14) disposée à l'extérieur de la zone de passage de l'installation, caractérisé en ce que le corps de rouleau (10) se compose d'une matière céramique appliquée au pistolet, en ce que l'agent de remplissage (12) consiste en graphite, carbone, oxyde métallique ou carbure de silicium, et en ce qu'il est prévu de l'agent de remplissage (12) dans la zone de la surface formant palier de rotation (14).

2. Rouleau selon la revendication 1, caractérisé en ce que le corps de rouleau (10) et/ou une garniture d'armature de traction (25) possède, au moins à une extrémité, une surface formant palier de rotation (14) pour des paliers de rotation (24), et l'agent de remplissage (12) remplit aussi complètement l'extrémité formant palier du corps de rouleau (10), et/ou en ce que le corps de rouleau (10) présente un diamètre réduit dans la zone de la surface formant palier de rotation (14).

3. Rouleau selon l'une des revendications 1 ou 2, caractérisé en ce qu'il est prévu un cylindre coaxial (19) disposé a l'intérieur du corps de rouleau (10), à une certaine distance de celui-ci, en ce que l'espace vide (11) situé entre le corps de rouleau (10) et le cylindre coaxial (19) est rempli au moins partiellement d'agent de remplissage (12), et en ce qu'il est prévu, à chacune des extrémités (52) du cylindre coaxial (19), une surface formant palier de rotation (14).

4. Rouleau selon l'une des revendications 1 à 3, caractérisé en ce que l'agent de remplissage (12) définissant le corps moulé est disposé en une ou plusieurs pièces dans l'espace vide (11, 18) du cylindre coaxial (19) et/ou du corps de rouleau (10) et est aggloméré avec le corps de rouleau (10) et/ou avec le cylindre coaxial (19), relié' par compactage, relié par collage, solidaire en rotation et par complémentarité de forme, à ceux-ci ou détaché de ceux-ci. complémentarité de forme, à ceux-ci ou détaché de ceux-ci.

5. Rouleau selon l'une des revendications 1 a 4, caractérisé en ce qu'il est prévu, sur la surface formant palier de rotation (14), un manchon d'usure (20) qui se compose de céramique ou d'une matière résistante à la corrosion.

6. Rouleau selon l'une des revendications 1 à 5, caractérisé en ce qu'il est prévu, a l'une au moins des extrémités du corps de rouleau (10) et/ou du corps coaxial (19), une plaque de fermeture (21) qui protège l'agent de remplissage (12).

7. Rouleau selon la revendication 6, caractérisé en ce que la plaque de fermeture (21) est insérée à l'intérieur du corps de rouleau (10) et/ou du corps coaxial (19) et/ou d'une garniture d'armature de traction (25) à l'aide d'un épaulement (22), et est reliée à ceux-ci et/ou à l'agent de remplissage (12) de façon fixe axialement et/ou solidaire en rotation, ou en ce que la plaque de fermeture (21) entoure extérieurement le corps de rouleau (10) et/ou le corps coaxial (19) et est bloquée sur ceux-ci, et/ou en ce que la plaque de fermeture (21) possède un tourillon de palier (23) pour le palier de rotation (15).

8. Rouleau selon l'une des revendications 1 à 7, caractérisé en ce qu'il est prévu, dans l'espace vide (11, 18) du corps de rouleau (10) et/ou du corps coaxial (19), des garnitures d'armature de traction (25) situées à proximité des éléments en céramique.

9. Rouleau selon la revendication 8, caractérisé en ce qu'une garniture d'armature de traction (25) est reliée de façon indétachable à l'agent de remplissage (12) et/ou consiste en un corps ayant une rigidité propre et/ou précontraint, apte à être rempli d'agent de remplissage (12).

10. Rouleau selon la revendication 9, caractérisé en ce que le corps à rigidité propre disposé a l'intérieur du corps de rouleau (10) et/ou du corps coaxial (19) possède deux plaques moulées (27) maintenues écartées par une barre en céramique (25), et est entouré ou traversé par une matière fibreuse (28) maintenant ensemble ces éléments et/ou possède une extrémité de traction sortie du rouleau (45').

**11.** Rouleau selon l'une des revendications 1 à 10, caractérisé en ce qu'il possède un raccordement d'admission de gaz (70) pour l'espace vide (11) du corps de rouleau (10) et/ou un ou plusieurs raccordements pour de l'énergie électrique.

**12.** Rouleau comportant un palier de rotation selon l'une des revendications 1 à 11, caractérisé en ce que le palier de rotation (24) du rouleau est pourvu d'une ou plusieurs surfaces formant paliers de support (29) d'un corps de palier (30) contenant du graphite, du carbone, du carbure de silicium ou de l'oxyde métallique.

**13.** Rouleau selon la revendication caractérisé en ce que le corps de palier (30) se compose de deux manchons de palier (31) concentriques et aptes à effectuer un mouvement relatif dans une coquille de palier (35) et entre lesquels est disposé un manchon de palier (32) en céramique apte à effectuer un mouvement relatif.

**14.** Rouleau selon la revendication 12 ou 13, caractérisé en ce que le corps de palier (30) du rouleau est pourvu d'un jeu de palier (33) permettant l'entrée de matière fondue et possède des cavités de séparation verticales (34) permettant une séparation des déchets d'usure du corps de palier (30), et/ou des chambres d'expansion de matière fondue (61).

**15.** Rouleau selon la revendication 12 ou 13, caractérisé en ce que le corps de palier (10) du rouleau est entouré par une coquille de palier (35) qui est rendue étanche, de part et d'autre du corps de palier (30), à l'aide d'éléments d'étanchéité (36) au niveau de la surface formant palier de rotation (14) du rouleau.

**16.** Rouleau selon la revendication 15, caractérisé en ce qu'un élément d'étanchéité (36) consiste en une bague d'étanchéité, en une plaque d'usure 938, 63) du corps de palier (30) encastrée dans une cavité de logement (37) de la coquille de palier (35) prévue pour des manchons de palier (31, 32), ou en un remplissage (39) de poudre dont le diamètre de grains dépasse la largeur de fente (w) prévue entre la coquille de palier (35) et la surface formant palier de rotation (14).

**17.** Rouleau selon la revendication 15 ou 16, caractérisé en ce que l'élément d'étanchéité (36) se compose de graphite, de carbone, d'oxyde métallique, de carbure de silicium ou d'un métal résistant à la chaleur, ou d'un joint de fibres résistant à la chaleur.

**18.** Rouleau selon l'une des revendications 12 à 17, caractérisé en ce que le corps de palier (30) est réalisé d'une seule pièce avec des cavités de séparation (34) creusées, ou se compose de plusieurs plaques de graphite maintenues écartées par des bagues en céramique (62).

**19.** Rouleau selon l'une des revendications 12 à 18, caractérisé en ce qu'au moins l'extrémité côté four (30') du corps de palier (30) supportant une extrémité de rouleau (45') est apte à être encastrée pour faire saillie dans la paroi de four (64) ou dans l'espace de four (68).

_FIG . 1_

_FIG . 2_

FIG. 3

FIG. 4

FIG. 5

FIG. 6

FIG. 7

EP 0 292 953 B1

FIG. 8

FIG. 9